# EUROPEAN PATENT APPLICATION

(11) **EP 3 518 166 A1**
(43) Date of publication of application: **31.07.2019**
(21) Application number: 17852139.9
(22) Date of filing: 10.05.2017
(51) Int. Cl.: G06Q 20/40, G06Q 20/38, G06Q 20/32

(54) **MOBILE TERMINAL-BASED PAYMENT METHOD AND MOBILE TERMINAL**

(30) Priority: 23.09.2016 CN 201610848364
(71) Applicant: Huizhou TCL Mobile Communication Co., Ltd., Huizhou, Guangdong 516006 (CN)
(72) Inventor: JIN, Xin, Huizhou, Guangdong 516006 (CN)
(74) Representative: de Arpe Fernandez, Manuel
(86) International application number: PCT/CN2017/083756
(87) International publication number: WO 2018/054065

(57) **Abstract**

The present disclosure discloses a payment method based on a mobile terminal and a mobile terminal. The method may include: obtaining current payment scene information of the mobile terminal; determining a current security level corresponding to the current payment scene information based on the current payment scene information and a corresponding relation between preset payment scene information and a security level; obtaining a predetermined payment limit corresponding to the current security level; determining whether a payment amount of the mobile terminal is within the predetermined payment limit; and normally paying the payment amount by the mobile terminal when the payment amount of the mobile terminal is within the predetermined payment limit; wherein the corresponding relation between the preset payment scene information and the security level dynamically may change with a payment parameter of the mobile terminal. Through the above mentioned way, the present disclosure could dynamically change the payment limit of the mobile terminal, and make it convenient for users to pay and enhance payment security.

## Description

### TECHNICAL FIELD

The present disclosure relates to the field of mobile terminal, and more particularly, to a payment method based on a mobile terminal and a mobile terminal.

### BACKGROUND

At present, payment functions of mobile terminals have become widely used functions. To safeguard payment security of the mobile terminals, generally a payment limit is restricted, for example, each payment amount cannot exceed 500 yuan, etc.

However, when users use the mobile terminals to make a payment, the payment amount is not fixed. Therefore, when the payment amount exceeds the payment limit, for example, when the payment amount is 2,000 yuan, the payment limit needs to be manually set, which is cumbersome in operation. In the meanwhile, the mobile terminals are in different payment environments, some payment environments have higher security levels, such as payment at home, and some payment environments have lower security levels, such as payment in a public Internet bar. The risk of payment may be increased if a higher payment limit is uniformly adopted.

### SUMMARY

A technical problem mainly to be solved by the present disclosure is to provide a payment method based on a mobile terminal and a mobile terminal, which can dynamically change the payment limit of the mobile terminal, and make it convenient for users to pay and enhance payment security.

To solve the above technical problem, the present disclosure adopts a technical solution as below. A mobile terminal may be provided. The mobile terminal may include: a first obtaining module, arranged in the mobile terminal and configured to obtain current payment scene information of the mobile terminal; a second obtaining module, arranged in the mobile terminal, connected to the first obtaining module, and configured to determine a current security level corresponding to the current payment scene information based on the current payment scene information obtained by the first obtaining module and a corresponding relation between preset payment scene information and a security level; a third obtaining module, arranged in the mobile terminal, connected to the second obtaining module, and configured to obtain a predetermined payment limit corresponding to the current security level obtained by the second obtaining module; a determining module, arranged in the mobile terminal, connected to the third obtaining module, and configured to determine whether a payment amount of the mobile terminal is within the predetermined payment limit obtained by the third obtaining module; and a processing module, arranged in the mobile terminal, connected to the determining module, and configured to normally pay the payment amount when the determining module determines that the payment amount of the mobile terminal is within the predetermined payment limit. The corresponding relation between the preset payment scene information and the security level dynamically changes with a payment parameter of the mobile terminal. The payment parameter may include number of normal payments and/or number of abnormal payments. The mobile terminal may further include: a security level setting module, arranged in the mobile terminal, connected to the first obtaining module, and configured to: after the first obtaining module obtains the current payment scene information of the mobile terminal, obtain the payment parameter of the mobile terminal under the current payment scene information; and set the security level corresponding to the payment scene information based on the payment parameter. The payment scene information may include at least one of current geographical location information corresponding to the mobile terminal, accessed cell-ID, accessed WiFi hotspot information, near field communication (NFC) device information, and accessed Bluetooth adapter information.

To solve the above technical problem, the present disclosure adopts another technical solution as below. A payment method based on a mobile terminal may be provided. The method may include: obtaining current payment scene information of the mobile terminal; determining a current security level corresponding to the current payment scene information based on the current payment scene information and a corresponding relation between preset payment scene information and a security level; obtaining a predetermined payment limit corresponding to the current security level; determining whether a payment amount of the mobile terminal is within the predetermined payment limit; and normally paying the payment amount by the mobile terminal when the payment amount of the mobile terminal is within the predetermined payment limit. The corresponding relation between the preset payment scene information and the security level dynamically may change with a payment parameter of the mobile terminal, the payment parameter may include number of normal payments and/or number of abnormal payments.

To solve the above technical problem, the present disclosure adopts still another technical solution as below. A mobile terminal may be provided. The mobile terminal may include,: a processor and a memory coupled to the processor. The memory may be configured to store program instructions. The processor may be configured to: execute the program instructions to obtain current payment scene information of the mobile terminal; determine a current security level corresponding to the current payment scene information based on the current payment scene information and a corresponding relation between preset payment scene information and a security level; obtain a predetermined payment limit corresponding to the current security level; determine whether a payment amount of the mobile terminal is within the predetermined payment limit; and normally pay the payment amount by the mobile terminal when the payment amount of the mobile terminal is within the predetermined payment limit. The corresponding relation between the preset payment scene information and the security level dynamically changes with a payment parameter of the mobile terminal, the payment parameter may include number of normal payments and/or number of abnormal payments.

Beneficial effects of the present disclosure are as below. Different from the related art, according to the payment method based on a mobile terminal and the mobile terminal provided by the present disclosure, the current payment scene information of the mobile terminal may be obtained. The current security level corresponding to the current payment scene information may be determined based on the current payment scene information and the corresponding relation between preset payment scene information and a security level. The predetermined payment limit corresponding to the current security level may be obtained. It is determined whether a payment amount of the mobile terminal is within the predetermined payment limit. The mobile terminal normally pays the payment amount when the payment amount of the mobile terminal is within the predetermined payment limit. Through the above mentioned way, the present disclosure could dynamically change the payment limit, and make it convenient for users to pay and enhance payment security.

### BRIEF DESCRIPTION OF THE DRAWINGS

FIG. 1 is a flowchart of a payment method based on a mobile terminal according to an embodiment of the present disclosure;
FIG. 2 is a schematic structural diagram of a mobile terminal according to an embodiment of the present disclosure; and
FIG. 3 is a schematic structural diagram of a physical apparatus of the mobile terminal according to an embodiment of the present disclosure.

### DETAILED DESCRIPTION

Certain terms are used throughout this description and claims to refer to particular components. As one skilled in the art will appreciate, manufacturers may refer to the same component by different names. This description and claims do not intend to distinguish between components that differ in name but distinguish between components that differ in functionality. The present disclosure is described in detail in the following with reference to the accompanying drawings and embodiments.

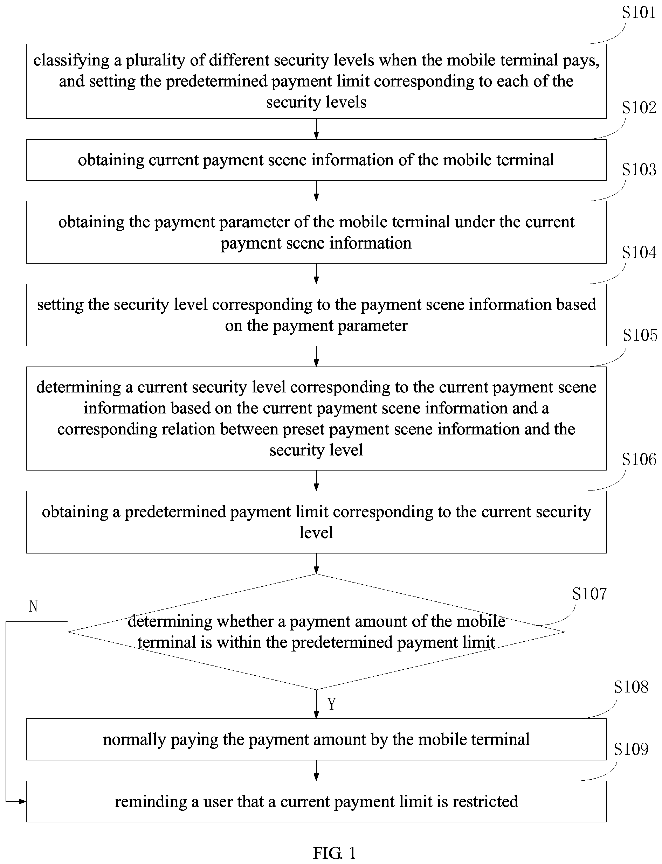

FIG. 1 is a flowchart of a payment method based on a mobile terminal according to an embodiment of the present disclosure. It is to be noted that, if there is substantially the same result, the method of the present disclosure is not limited to the flow order shown in FIG. 1. As shown in FIG. 1, the method may include:
Block S101: classifying a plurality of different security levels when the mobile terminal pays, and setting the predetermined payment limit corresponding to each of the security levels.

In block S101, the security levels and the predetermined payment limit corresponding to each of the security levels may be set based on actual demands of a user of the mobile terminal. For example, the security levels may be classified into a high security level, an intermediate security level, and a low security level. The predetermined payment limit corresponding to the high security level may be set to be the highest, for example, 2,000 yuan. The predetermined payment limit corresponding to the low security level may be set to be the lowest, for example, 500 yuan. The predetermined payment limit corresponding to the intermediate security level may be set to be between the highest limit and the lowest limit, for example, 1,000 yuan.

Block S102: obtaining current payment scene information of the mobile terminal.

In block S102, the current payment scene information of the mobile terminal may include at least one of current geographical location information corresponding to the mobile terminal, accessed cell-ID, accessed WiFi hotspot information, near field communication (NFC) device information, and accessed Bluetooth adapter information.

Block S103: obtaining the payment parameter of the mobile terminal under the current payment scene information.

In block S103, the payment parameter of the mobile terminal may include number of normal payments and/or number of abnormal payments of the mobile terminal. That is, obtaining the payment parameter of the mobile terminal under the current payment scene information specifically may include: obtaining the number of normal payments and/or number of abnormal payments of the mobile terminal under the current payment scene information.

Block S104: setting the security level corresponding to the payment scene information based on the payment parameter.

In block S104, in this embodiment, when the payment parameter is the number of normal payments, the security level corresponding to the payment scene information may be set based on the number of normal payments. For example, when the security levels are classified into the high security level, the intermediate security level, and the low security level: when the number of normal payments is less than a first predetermined value, for example, 5 times, the security level corresponding to the payment scene information may be set as the low security level; when the number of normal payments is greater than or equal to the first predetermined value and less than a second predetermined value, for example, greater than or equal to 5 times and less than 10 times, the security level corresponding to the payment scene information may be set as the intermediate security level; when the number of normal payments is greater than or equal to the second predetermined value, for example, greater than or equal to 10 times, the security level corresponding to the payment scene information may be set as the high security level. In addition, when the mobile terminal has not pay yet based on the current payment scene information, its security level may be the low security level by default. Those skilled in the art may understand that, in this embodiment, the security level corresponding to the current payment scene information of the mobile terminal is not fixed, but may vary as the number of normal payments changes. In other words, the more the number of normal payments is, the higher the security level is, i.e., the higher the security coefficient of the security level is.

In other embodiments, when the payment parameter is the number of abnormal payments, the security level corresponding to the payment scene information may be set based on the number of abnormal payments. For example, when the security levels are classified into the high security level, the intermediate security level, and the low security level: when the number of abnormal payments is less than a first predetermined value, the security level corresponding to the payment scene information may be set as the high security level; when the number of abnormal payments is greater than or equal to the first predetermined value and less than a second predetermined value, the security level corresponding to the payment scene information may be set as the intermediate security level; when the number of abnormal payments is greater than or equal to the second predetermined value, the security level corresponding to the payment scene information may be set as the low security level.

In addition, in other embodiments, when the payment parameter includes number of normal payments and number of abnormal payments, the security level corresponding to the payment scene information may be set based on the number of normal payments and the number of abnormal payments. For example, when the security levels are classified into the high security level, the intermediate security level, and the low security level: when the number of normal payments is greater than or equal to a first predetermined value and the number of abnormal payments is less than a second predetermined value, the security level corresponding to the payment scene information may be set as the high security level; when the number of abnormal payments is greater than or equal to the second predetermined value, the security level corresponding to the payment scene information may be set as the low security level; and the security level corresponding to the payment scene information may be set as the intermediate security level in other circumstances.

Block S105: determining a current security level corresponding to the current payment scene information based on the current payment scene information and a corresponding relation between preset payment scene information and the security level.

In Block S105, in this embodiment, for example, supposing the number of normal payments corresponding to the current payment scene information is 8 times, in block S104 the payment scene information is set to be corresponding to the intermediate security level, and at this moment, the current security level may be determined as the intermediate security level based on the corresponding relation between the payment scene information and the security level set in block S104.

Block S106: obtaining a predetermined payment limit corresponding to the current security level.

In block S106, in this embodiment, for example, when the current security level is the intermediate security level, the obtained predetermined payment limit may be 1,000 yuan.

Block S107: determining whether a payment amount of the mobile terminal is within the predetermined payment limit. Block S108 is performed if the payment amount is within the predetermined payment limit, otherwise block S109 is performed.

Block S108: normally paying the payment amount by the mobile terminal.

In block S108, in this embodiment, for example, when the payment amount of the mobile terminal is 500 yuan, the mobile terminal normally pays the payment amount because in block S107 it is determined that the payment amount (i.e., 500 yuan) of the mobile terminal is within the predetermined payment limit (i.e., 1,000 yuan). In the meanwhile, the mobile terminal will perform a "plus one" operation based on the number of normal payments under the payment scene information.

Block S109: reminding a user that a current payment limit is restricted.

In block S109, in this embodiment, for example, when the payment amount of the mobile terminal is 1,500 yuan, in block S107 it is determined that the payment amount (i.e., 1,500 yuan) of the mobile terminal is not within the predetermined payment limit (i.e., 1,000 yuan). At this moment, the mobile terminal may remind the user that the current payment limit is restricted, and thus the mobile terminal cannot normally pay the payment amount. In the meanwhile, the mobile terminal will perform a "plus one" operation based on the number of abnormal payments under the payment scene information.

Those skilled in the art may understand that, in practical application, block S102-block S109 are repeated, such that dynamically changing the payment limit of the mobile terminal is implemented.

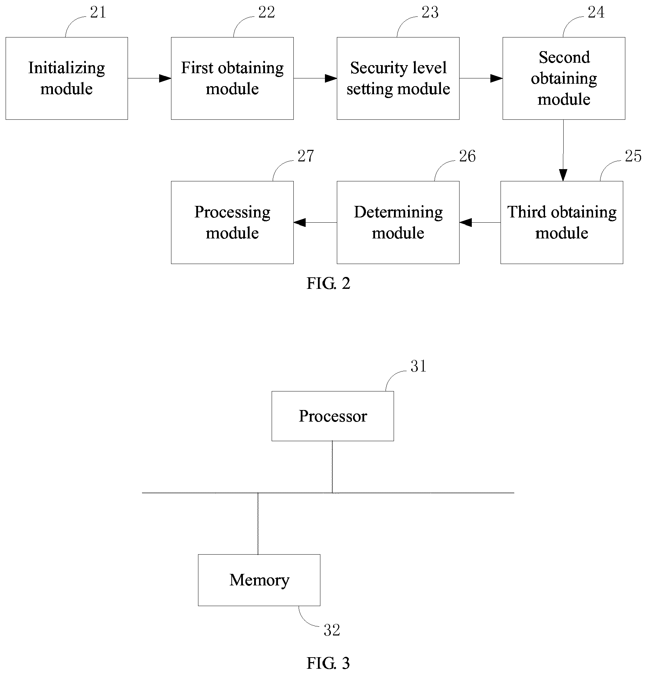

FIG. 2 is a schematic structural diagram of a mobile terminal according to an embodiment of the present disclosure. As shown in FIG. 2, the mobile terminal may include an initializing module 21, a first obtaining module 22, a security level setting module 23, a second obtaining module 24, a third obtaining module 25, a determining module 26, and a processing module 27.

The initializing module 21 may be arranged in the mobile terminal and configured to classify a plurality of different security levels when the mobile terminal pays and set the predetermined payment limit corresponding to each of the security levels.

The first obtaining module 22 may be arranged in the mobile terminal, connected to the initializing module 21, and configured to obtain current payment scene information of the mobile terminal after the initializing module 21 completes an initialization. The payment scene information may include at least one of current geographical location information corresponding to the mobile terminal, accessed cell-ID, accessed WiFi hotspot information, near field communication (NFC) device information, and accessed Bluetooth adapter information.

The security level setting module 23 may be arranged in the mobile terminal, connected to the first obtaining module 22, and configured to: after the first obtaining module 22 obtains the current payment scene information of the mobile terminal, obtain the payment parameter of the mobile terminal under the current payment scene information, the payment parameter may include number of normal payments and/or number of abnormal payments; and set the security level corresponding to the payment scene information based on the payment parameter.

The second obtaining module 24 may be arranged in the mobile terminal, respectively connected to the first obtaining module 22 and the security level setting module 23, and configured to determine a current security level corresponding to the current payment scene information based on the current payment scene information obtained by the first obtaining module 22 and a corresponding relation between payment scene information preset by the security level setting module 23 and a security level. The corresponding relation between the payment scene information preset by the security level setting module 23 and the security level dynamically changes with a payment parameter of the mobile terminal.

The third obtaining module 25 may be arranged in the mobile terminal, connected to the second obtaining module 24, and configured to obtain a predetermined payment limit corresponding to the current security level obtained by the second obtaining module 24.

The determining module 26 may be arranged in the mobile terminal, connected to the third obtaining module 25, and configured to determine whether a payment amount of the mobile terminal is within the predetermined payment limit obtained by the third obtaining module 25.

The processing module 27 may be arranged in the mobile terminal, connected to the determining module 26, and configured to: normally pay the payment amount when the determining module 26 determines that the payment amount of the mobile terminal is within the predetermined payment limit; and remind a user that a current payment limit is restricted when the determining module 26 determines that the payment amount of the mobile terminal is not within the predetermined payment limit.

FIG. 3 is a schematic structural diagram of a physical apparatus of the mobile terminal according to an embodiment of the present disclosure. The apparatus in this embodiment may perform the blocks in the above method, and its relevant content may refer to detailed descriptions of the above method, which is omitted herein.

The apparatus may include: a processor 31 and a memory 32 coupled to the processor 31.

The memory 32 may be configured to store program instructions.

The processor 31 may be configured to: execute the program instructions to obtain current payment scene information of the mobile terminal; determine a current security level corresponding to the current payment scene information based on the current payment scene information and a corresponding relation between preset payment scene information and a security level; obtain a predetermined payment limit corresponding to the current security level; determine whether a payment amount of the mobile terminal is within the predetermined payment limit; and normally pay the payment amount by the mobile terminal when the payment amount of the mobile terminal is within the predetermined payment limit. The corresponding relation between the preset payment scene information and the security level dynamically may change with a payment parameter of the mobile terminal, wherein the payment parameter may include number of normal payments and/or number of abnormal payments.

The processor 31 is further configured to: after performing the obtaining current payment scene information of the mobile terminal, obtain the payment parameter of the mobile terminal under the current payment scene information; and set the security level corresponding to the payment scene information based on the payment parameter.

The processor 31 is further configured to: before performing the obtaining current payment scene information of the mobile terminal, classify a plurality of different security levels when the mobile terminal pays; and set the predetermined payment limit corresponding to each of the security levels.

The processor 31 is further configured to remind a user that a current payment limit is restricted when the payment amount of the mobile terminal is not within the predetermined payment limit.

The payment scene information may include at least one of current geographical location information corresponding to the mobile terminal, accessed cell-ID, accessed WiFi hotspot information, near field communication (NFC) device information, and accessed Bluetooth adapter information.

Beneficial effects of the present disclosure are as below. Different from the related art, according to the payment method based on a mobile terminal and the mobile terminal provided by the present disclosure, the current payment scene information of the mobile terminal may be obtained. The current security level corresponding to the current payment scene information may be determined based on the current payment scene information and the corresponding relation between preset payment scene information and a security level. The predetermined payment limit corresponding to the current security level may be obtained. It is determined whether a payment amount of the mobile terminal is within the predetermined payment limit. The mobile terminal normally may pay the payment amount when the payment amount of the mobile terminal is within the predetermined payment limit. Through the above mentioned way, the present disclosure can dynamically change the payment limit of the mobile terminal, and make it convenient for users to pay and enhance payment security.

In the embodiments provided by the present disclosure, it should be understood that the disclosed systems, apparatuses and methods may be implemented by means of other manners. For example, the apparatus embodiments set forth above are merely exemplary. For example, the module or unit partition is merely a logic functional partition. In actual implementation, additional manners of partitioning may be available. For example, multiple units or components may be combined or integrated into another system, or some features may be ignored and not executed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, i.e., either located at one place or distributed on a plurality of network units. Units may be selected in part or in whole according to actual needs to implement the objectives of the solutions of the embodiments.

In addition, functional units in the embodiments of the present disclosure may be integrated into one processing unit, or each of the units may exist alone physically, or two or more units are integrated into one unit. The foregoing integrated units may either be implemented in the form of hardware or be implemented in the form of software function units.

The integrated units may be stored in a computer-readable storage medium if they are implemented in the form of software function units and are sold or used as independent products. Based on such an understanding, the technical solutions of the present disclosure in essence or that part of contribution to the prior art or a part of the technical solution may be embodied in the form of software products, which may be stored in a storage medium, comprising some instructions to cause a computer device (a personal computer, a server or a network device and so on) or a processor to execute all or a part of blocks of the method as recited in the embodiments of the present disclosure. The aforementioned storage medium may include: a USB flash disk, a mobile hard disk, a read-only memory (ROM), a random access memory (RAM), a magnetic disk or an optical disk and other media capable of storing a program code.

The above are merely embodiments of the present disclosure and are not intended to limit the patent scope of the present disclosure. Any modifications of equivalent structure or equivalent process made on the basis of the description of the present disclosure or directly or indirectly applied to other related technical fields shall similarly fall within the scope of patent protection of the present disclosure.

## Claims

1. A mobile terminal, comprising:
a first obtaining module, arranged in the mobile terminal and configured to obtain current payment scene information of the mobile terminal;
a second obtaining module, arranged in the mobile terminal, connected to the first obtaining module, and configured to determine a current security level corresponding to the current payment scene information based on the current payment scene information obtained by the first obtaining module and a corresponding relation between preset payment scene information and a security level;
a third obtaining module, arranged in the mobile terminal, connected to the second obtaining module, and configured to obtain a predetermined payment limit corresponding to the current security level obtained by the second obtaining module;
a determining module, arranged in the mobile terminal, connected to the third obtaining module, and configured to determine whether a payment amount of the mobile terminal is within the predetermined payment limit obtained by the third obtaining module; and
a processing module, arranged in the mobile terminal, connected to the determining module, and configured to normally pay the payment amount when the determining module determines that the payment amount of the mobile terminal is within the predetermined payment limit;
wherein the corresponding relation between the preset payment scene information and the security level dynamically changes with a payment parameter of the mobile terminal, wherein the payment parameter comprises number of normal payments and/or number of abnormal payments;
wherein the mobile terminal further comprises:
a security level setting module, arranged in the mobile terminal, connected to the first obtaining module, and configured to: after the first obtaining module obtains the current payment scene information of the mobile terminal, obtain the payment parameter of the mobile terminal under the current payment scene information; and set the security level corresponding to the payment scene information based on the payment parameter;
wherein the payment scene information comprises at least one of current geographical location information corresponding to the mobile terminal, accessed cell-ID, accessed WiFi hotspot information, near field communication (NFC) device information, and accessed Bluetooth adapter information.

2. The mobile terminal according to claim 1, wherein the mobile terminal further comprises: an initializing module, arranged in the mobile terminal, connected to the first obtaining module, and configured to: before the first obtaining module obtains the current payment scene information of the mobile terminal, classify a plurality of different said security levels when the mobile terminal pays; and set the predetermined payment limit corresponding to each of the security levels.

3. The mobile terminal according to claim 1, wherein the processing module is further configured to remind a user that a current payment limit is restricted when the determining module determines that the payment amount of the mobile terminal is not within the predetermined payment limit.

4. A payment method based on a mobile terminal, comprising:
obtaining current payment scene information of the mobile terminal;
determining a current security level corresponding to the current payment scene information based on the current payment scene information and a corresponding relation between preset payment scene information and a security level;
obtaining a predetermined payment limit corresponding to the current security level;
determining whether a payment amount of the mobile terminal is within the predetermined payment limit; and
normally paying the payment amount by the mobile terminal when the payment amount of the mobile terminal is within the predetermined payment limit;
wherein the corresponding relation between the preset payment scene information and the security level dynamically changes with a payment parameter of the mobile terminal, and wherein the payment parameter comprises number of normal payments and/or number of abnormal payments.

5. The payment method according to claim 4, wherein after the obtaining current payment scene information of the mobile terminal, the method further comprises:
obtaining the payment parameter of the mobile terminal under the current payment scene information; and
setting the security level corresponding to the payment scene information based on the payment parameter.

6. The payment method according to claim 5, wherein before the obtaining current payment scene information of the mobile terminal, the method further comprises:
classifying a plurality of different said security levels when the mobile terminal pays; and
setting the predetermined payment limit corresponding to each of the security levels.

7. The payment method according to claim 4, wherein a user is reminded that a current payment limit is restricted when the payment amount of the mobile terminal is not within the predetermined payment limit.

8. The payment method according to claim 4, wherein the payment scene information comprises at least one of current geographical location information corresponding to the mobile terminal, accessed cell-ID, accessed WiFi hotspot information, near field communication (NFC) device information, and accessed Bluetooth adapter information.

9. A mobile terminal, comprising: a processor and a memory coupled to the processor;
wherein the memory is configured to store program instructions; and
the processor is configured to: execute the program instructions to obtain current payment scene information of the mobile terminal; determine a current security level corresponding to the current payment scene information based on the current payment scene information and a corresponding relation between preset payment scene information and a security level; obtain a predetermined payment limit corresponding to the current security level; determine whether a payment amount of the mobile terminal is within the predetermined payment limit; and normally pay the payment amount by the mobile terminal when the payment amount of the mobile terminal is within the predetermined payment limit; wherein the corresponding relation between the preset payment scene information and the security level dynamically changes with a payment parameter of the mobile terminal, and wherein the payment parameter comprises number of normal payments and/or number of abnormal payments.

10. The mobile terminal according to claim 9, wherein the processor is further configured to: after performing the obtaining current payment scene information of the mobile terminal, obtain the payment parameter of the mobile terminal under the current payment scene information; and set the security level corresponding to the payment scene information based on the payment parameter.

11. The mobile terminal according to claim 10, wherein the processor is further configured to: before performing the obtaining current payment scene information of the mobile terminal, classify a plurality of different said security levels when the mobile terminal pays; and set the predetermined payment limit corresponding to each of the security levels.

12. The mobile terminal according to claim 9, wherein the processor is further configured to remind a user that a current payment limit is restricted when the payment amount of the mobile terminal is not within the predetermined payment limit.

13. The mobile terminal according to claim 9, wherein the payment scene information comprises at least one of current geographical location information corresponding to the mobile terminal, accessed cell-ID, accessed WiFi hotspot information, near field communication (NFC) device information, and accessed Bluetooth adapter information.
